(19) Europäisches Patentamt / European Patent Office / Office européen des brevets

(11) **EP 4 648 014 A1**

(12) **EUROPEAN PATENT APPLICATION**

(43) Date of publication:
**12.11.2025 Bulletin 2025/46**

(21) Application number: **25174576.6**

(22) Date of filing: **06.05.2025**

(51) International Patent Classification (IPC):
**G06T 13/40** *(2011.01)*

(52) Cooperative Patent Classification (CPC):
**G06T 13/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.05.2024 US 202418661444**

(71) Applicant: **Microsoft Technology Licensing, LLC
Redmond, WA 98052 (US)**

(72) Inventor: **CHALK, DANIEL J
Redmond, 98052 (US)**

(74) Representative: **CMS Cameron McKenna Nabarro
Olswang LLP
Cannon Place
78 Cannon Street
London EC4N 6AF (GB)**

(54) **TEXTURE JOINT ANIMATION**

(57) The description relates to computer graphics techniques for generating animations. In the disclosed techniques, skeletal animation data is generated representing a skeleton. A mesh is then bound to the skeleton to create mesh binding data. The skeletal animation data and the mesh binding data can be used to deform the mesh to generate an animation. In some cases, the skeletal animation data and the mesh binding data can be generated during an offline process. Then, the deformation can be performed at runtime, e.g., by a graphics processing unit. The animation can be implemented in many different types of applications, including video games, virtual reality applications, augmented reality applications, etc.

**FIG. 1**

## Description

## BACKGROUND

There are various techniques for animating characters in a video game, augmented reality application, and/or virtual reality application. For instance, skeletal mesh animation techniques allow for a great deal of runtime flexibility in that arbitrary animations can be applied to a character. However, skeletal mesh animation does not scale well to animating multiple characters at one time. Another technique known as texture vertex animation is much more performant than skeletal mesh animation for concurrent animation of multiple characters. However, texture vertex animation is limited to specific characters at specific levels of detail and cannot be readily extended to other characters and/or other levels of detail. In addition, texture vertex animation generally does not allow for runtime variation of the animation, because the entire animation is precomputed and then the precomputed animation is applied in its entirety at runtime.

## SUMMARY

This Summary is provided to introduce a selection of concepts in a simplified form. These concepts are further described below in the Detailed Description. This Summary is not intended to identify key features or essential features of the claimed subject matter, nor is it intended to be used to limit the scope of the claimed subject matter.

The description generally relates to techniques for computer animation. In the disclosed techniques, skeletal animation data is generated representing a skeleton. A mesh is then bound to the skeleton to create mesh binding data. The skeletal animation data and the mesh binding data can be used to deform the mesh to generate an animation. In some cases, the skeletal animation data and the mesh binding data can be generated during an offline process. Then, the deformation can be performed at runtime, e.g., by a graphics processing unit. The animation can be implemented in many different types of applications, including video games, virtual reality applications, augmented reality applications, etc.

One example includes a computer-implemented method that can include generating skeletal animation data representing movement of a skeleton having joints connecting bones. The computer-implemented method can also include binding a mesh to the skeleton to obtain mesh binding data. The computer-implemented method can also include outputting the skeletal animation data and the mesh binding data, the skeletal animation data and the mesh binding data providing a basis for runtime deformation of the mesh to generate an animation.

Another example includes a computer-implemented method that can include obtaining skeletal animation data representing movement of a skeleton having joints connecting bones. The computer-implemented method can also include obtaining mesh binding data representing a binding of a mesh to the skeleton. The computer-implemented method can also include generating an animation by performing runtime deformation of the mesh based on the skeletal animation data and the mesh binding data.

Another example entails a system that includes a central processing unit and a graphics processing unit. The central processing unit is configured to obtain skeletal animation data representing movement of a skeleton having joints connecting bones, to obtain mesh binding data representing a binding of a mesh to the skeleton and to transfer the skeletal animation data and the mesh binding data to the graphics processing unit. The graphics processing unit is configured to receive the skeletal animation data and the mesh binding data from the central processing unit and to generate an animation by performing runtime deformation of the mesh based on the skeletal animation data and the mesh binding data.

The above-listed examples are intended to provide a quick reference to aid the reader and are not intended to define the scope of the concepts described herein.

## BRIEF DESCRIPTION OF THE DRAWINGS

The accompanying drawings illustrate implementations of the concepts conveyed in the present document. Features of the illustrated implementations can be more readily understood by reference to the following description taken in conjunction with the accompanying drawings. Like reference numbers in the various drawings are used wherever feasible to indicate like elements. In some cases, parentheticals are utilized after a reference number to distinguish like elements. Use of the reference number without the associated parenthetical is generic to the element. Further, the left-most numeral of each reference number conveys the FIG. and associated discussion where the reference number is first introduced.

FIG. 1 illustrates an example of an overall workflow for texture joint animation, consistent with some implementations of the present concepts.

FIGS. 2A, 2B, and 2C illustrate examples of a skeleton in different poses that can be employed to generate an animation, consistent with some implementations of the present concepts.

FIG. 3 illustrates pseudocode for generating a skeletal animation, consistent with some implementations of the present concepts.

FIGS. 4A and 4B illustrate examples of meshes that can be bound to a skeleton, consistent with some implementations of the present concepts.

FIGS. 5A and 5B illustrate examples of meshes that are bound to a skeleton, consistent with some implementations of the present concepts.

FIG. 6 illustrates pseudocode for binding a mesh to a skeleton, consistent with some implementations of the present concepts.

FIG. 7A illustrates an animation of a first character, consistent with some implementations of the present concepts.

FIG. 7B illustrates an animation of a second character, consistent with some implementations of the present concepts.

FIG. 8 illustrates pseudocode for deforming a bound mesh to generate an animation, consistent with some implementations of the present concepts.

FIG. 9 illustrates an example processing architecture, consistent with some implementations of the present concepts.

FIG. 10 illustrates an example of a system, consistent with some implementations of the present concepts.

FIG. 11 is a flowchart of an example method for generating animation data during offline processing in accordance with some implementations of the present concepts.

FIG. 12 is a flowchart of an example method for animating a character during runtime processing, in accordance with some implementations of the present concepts.

FIG. 13 is a table of experimental results that were obtained using an implementation of the present concepts.

## DETAILED DESCRIPTION

OVERVIEW

As noted above, computer animation techniques can vary in terms of performance and flexibility. While skeletal mesh animation is very flexible and can allow arbitrary movements of a character in response to user inputs received at runtime, skeletal mesh animation tends to have high main memory and central processing unit utilization costs. Thus, skeletal mesh animation generally does not scale well to animating multiple characters at one time. This is because, in skeletal mesh animation, the skeleton is animated on the central processing unit at runtime and the mesh is bound to the animated skeleton on the central processing unit at runtime. Skeletal animation and mesh binding are relatively complex operations, and the central processing unit can become a bottleneck when multiple animations are being performed, especially when the animations are responding rapidly to user inputs received at runtime.

Unlike skeletal mesh animation, texture vertex animation is very scalable because most of the runtime computation is performed on a graphics processing unit, which is designed to perform many operations in parallel. In texture vertex animation, an animation is precomputed using traditional techniques, such as skeletal mesh animation. Then, a texture representing the animation of each vertex of the animated character is precomputed and stored. At runtime, the stored texture can be used by the graphics processing without having to recompute the animation of the skeleton, the binding of the mesh to the skeleton, or the deformation of the mesh. Instead, the texture stored in the memory of the graphics processing unit provides the data needed to animate the character without further runtime recomputation. However, texture vertex animation tends to be a "baked" animation that is difficult to modify at runtime. In other words, texture vertex animations generally apply to every vertex of a mesh and cannot be dynamically adjusted based on user input once the animation is precomputed. Furthermore, texture vertex animation generally involves generating a texture for every combination of skeletal pose, mesh, and level of detail for a given character. If different characters and/or levels of detail are animated, then entirely new textures must be created and sent to the graphics processing animation even if the characters being animated share the same underlying skeleton.

The disclosed techniques can overcome some of the deficiencies described above for skeletal mesh animation and texture vertex animation using a technique referred to herein as texture joint animation. In texture joint animation, two precomputation steps are performed. First, a skeletal animation representing movement of bones of a skeleton is precomputed. Second, a mesh is bound to the skeleton, where the mesh represents a skin on a character to be animated. Here, the mesh binding indicates how individual vertices of the mesh are influenced by corresponding movement of the skeleton. At runtime, the mesh is deformed in accordance with the precomputed skeletal animation.

Texture joint animation allows the same skeleton and animation to be reused at different levels of detail and with meshes representing different characters. Because the animation is performed at the skeletal level instead of the vertex level, and there are generally far fewer joints in the skeleton than vertices on the skin, texture joint animation uses far less memory than texture vertex animation. Furthermore, as described more below, texture joint animation uses data structures that enable runtime selection of a subset of the skeletal animation in response to user input. Thus, for example, instead of replaying the entire animation in its entirety, texture joint animation allows for replaying only parts of an animation, such as a subset of frames of the animation and/or a subset of bones of the animation.

TERMINOLOGY

As used herein, the term "character" refers to a virtual entity such as a person, animal, or mythical creature that can be animated using the disclosed techniques. The term "animation" refers to movement of a character, e.g., by deforming one or more vertices of a mesh that represents a "skin" of the character. A character can have a "skeleton" of one or more bones connected by one or more joints. Note that a "skeleton" in this sense is a conceptual representation of an internal structure of a character and does not necessarily represent a biological "skeleton" of a living animal.

The term "skeletal animation data" refers to data representing movement of at least one bone of a skeleton relative to at least one other bone, where the bones are connected by a joint. The term "mesh" refers to a collection of data, such as vertices, edges, and faces, that represent the outer surface or "skin" of a character. The term "mesh binding data" refers to data that represents how the mesh is influenced by movement of individual bones of the skeleton. For instance, each vertex can be associated with one or more weights that indicate how heavily that vertex is influenced by a given bone or joint of a skeleton.

The term "deform" means to move the mesh in accordance with movement of the skeleton. By moving individual vertices of the mesh according to the movement of individual joints or bones of a skeleton, a character can be animated. The term "runtime" refers to the time when the animation is rendered on an end user device, e.g., by applying a precomputed animation on a graphics processing unit. The term "offline" refers to a time when a skeletal animation is generated and/or a mesh binding is created, which can occur prior to runtime and potentially on a different device than the end user device that renders the animation. In some cases, skeletal animation data and mesh binding data can be precomputed once and then distributed to many end user devices that replay the corresponding animation several times.

OVERALL WORKFLOW

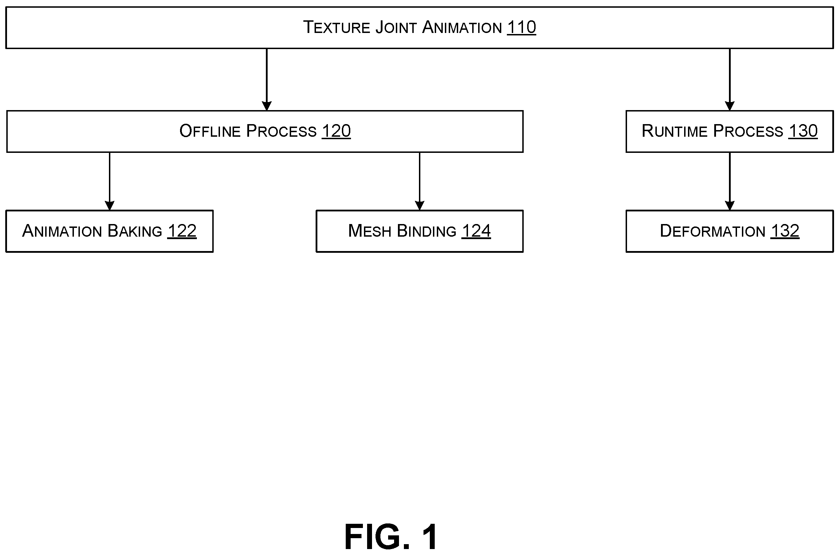

FIG. 1 illustrates an overall workflow of texture joint animation 110. Texture joint animation includes an offline process 120 and a runtime process 130. The offline process involves animation baking 122, which generates skeletal animation data. The offline process also includes mesh binding 124, which generates mesh binding data representing a binding of a mesh to the skeleton. As noted above, the offline process can be performed on one device and then the skeletal animation data and mesh binding data can be distributed to multiple other devices that perform the runtime process 130.

The runtime process 130 involves deformation 132, which is used to generate an animation by deforming the mesh according to the animation of the skeleton. The mesh can be deformed by offsetting vertex positions of the mesh based on the skeletal animation data. For instance, the mesh can be deformed by processing the skeletal animation data and the mesh binding data using a vertex shader on a graphics processing unit.

In some cases, the offline process is performed by an animator using a design tool, such as a digital content creation package. Using the design tool, the animator can create a character in a "bind pose" and then create movement of the character from one keyframe to another. The design tool can also be used to generate a skeleton for the character and to bind a mesh to the skeleton by assigning weights to one or more joints for each vertex of the mesh, where the weights convey the extent to which movement of those joints influence movement of respective vertices of the mesh. The design tool can also animate the skeleton based on the keyframes, and the animation of the skeleton with the mesh binding collectively allow for runtime animation by deforming the mesh according to the movement of the skeleton.

ANIMATION BAKING

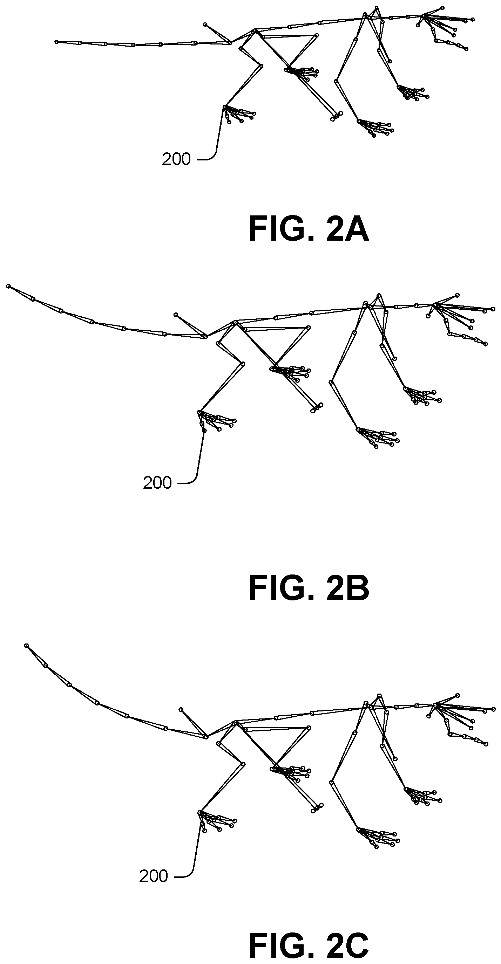

Animation baking involves animating a skeleton of a given character. As shown in FIG. 2A, a skeleton 200 of a character can be provided, and the skeleton includes a number of bones with joints connecting the bones. FIG. 2A represents a "bind pose," which is a neutral pose that can be used for subsequent binding of mesh data to the skeleton, as described more below. The skeleton can be animated by moving the bones/joints as shown in FIGS. 2B and 2C, which generally show the tail of the creature moving upward relative to the position in the bind pose. The animation of the skeleton can involve arbitrary movement of each bone relative to each joint, but for the purposes of example only the tail will move to illustrate the disclosed concepts.

The following describes how a joint-based animation can be stored during offline processing for subsequent animation at runtime. The skeletal animation data that is generated can be a per-joint transformation matrix. This is a complex structure that represents the transformation from one keyframe to another relative to each joint's position, orientation and scale. This data is stored in object space to ensure very quick computation at runtime. This complex per-joint transformation matrix is stored as a 3 x 4 matrix as follows:

$$\begin{bmatrix} M^{00} & M^{01} & M^{02} \\ M^{10} & M^{11} & M^{12} \\ M^{20} & M^{21} & M^{22} \\ M^{30} & M^{31} & M^{32} \end{bmatrix}$$

By representing a skeletal animation as a per-joint transformation matrix, the skeletal animation data and joints essentially caches a form of the skeletal animation data into 3 textures. Since textures can be readily transferred onto a graphics processing unit, this data can be accessed on the vertex shader of the graphics processing unit at runtime to reanimate a mesh, as described more below. Said another way, representing the skeletal animation data as textures suitable for processing using a graphics processing unit allows for efficient and low-latency processing of the skeletal animation data at runtime.

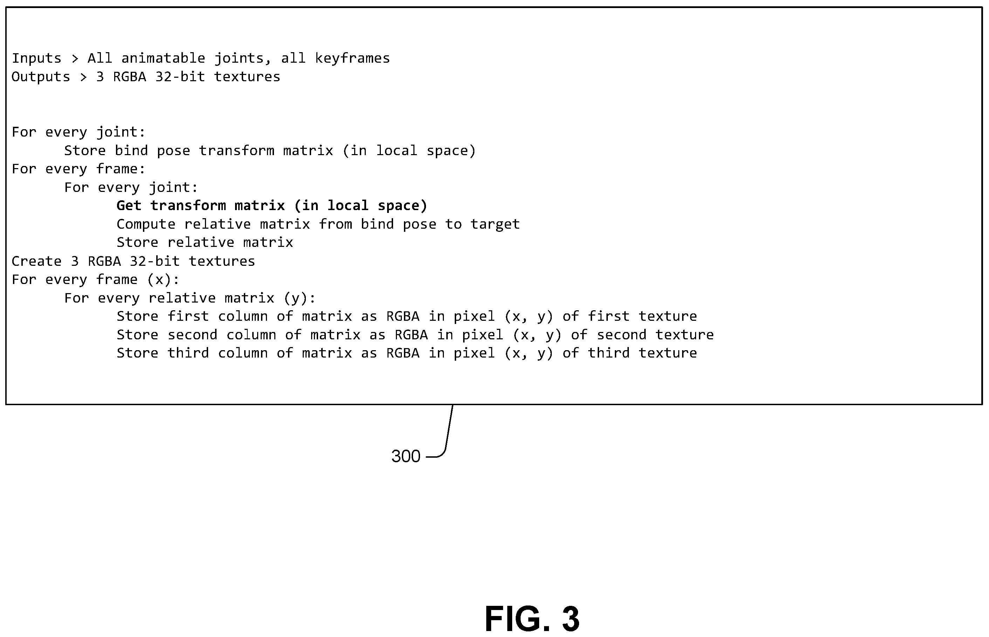

After skeletal animation process is complete, there are three textures that contain all the encoded skeletal animation data. This animation is stored during offline processing for subsequent reanimation at runtime. FIG. 3 illustrates pseudocode 300 for animation baking. The pseudocode receives a skeleton with joints that can be animated, and two or more keyframes representing movement of a vertex among the keyframes. The movement of the vertex from one keyframe to the next is represented relative to the position, orientation, and scale of each joint in the skeleton. The output of the pseudocode is a set of textures (e.g., "skeletal animation data") that represent how the underlying skeleton is animated from one keyframe to the next.

MESH BINDING

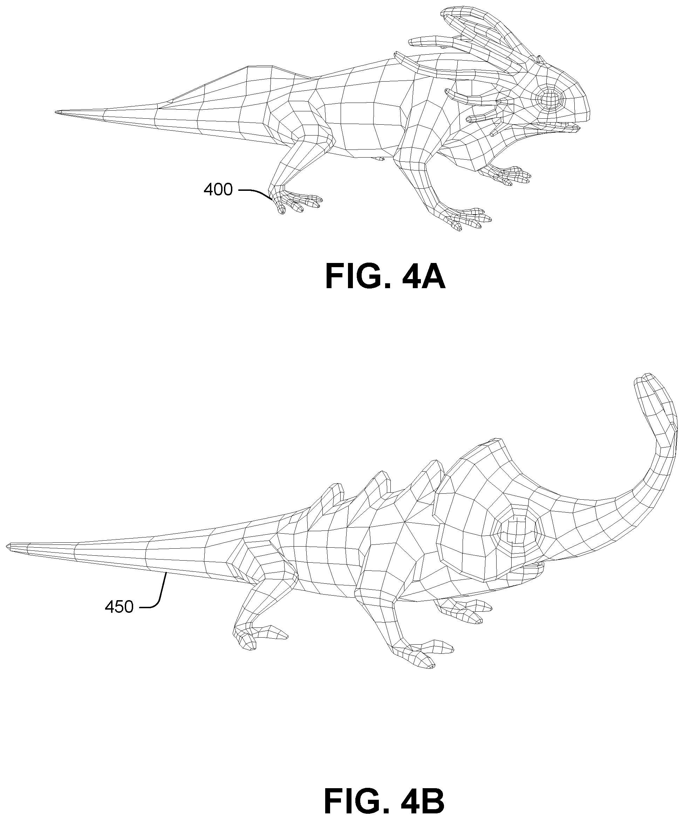

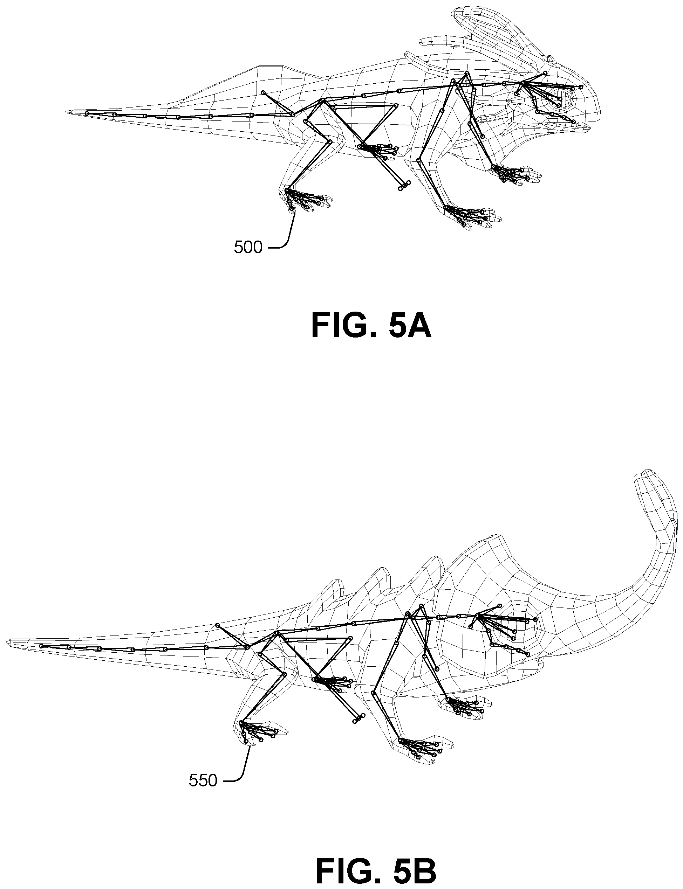

Once the skeleton animation data has been generated from the keyframes, one or more meshes can be bound to the skeleton. FIG. 4A shows a first mesh 400 and FIG. 4B shows a second mesh 450, representing different characters that can be animated using the disclosed techniques. Note that the different characters are somewhat similar in size and shape that allow them to share the same skeleton, but have some very different features, such as the bump on the tail of the first creature and the long nose of the second creature. The following describes how both a first mesh 400 and a second mesh 450 can be bound to skeleton 200, resulting in skeletal-bound mesh 500, shown in FIG. 5A, and skeletal-bound mesh 550, shown in FIG. 5B.

To bind the meshes 400 and/or 450 to the skeleton, a "skin weighting" technique can be applied. Here, each vertex on the mesh is represented with weights that characterize the relative influence of one or more joints on that vertex. In other words, the weights convey how much movement of that joint results in a corresponding movement of that vertex. In some cases, the number of joints that influence each vertex has a fixed value, e.g., 4. Thus, for instance, referring to FIG. 5A and 5B, a vertex on the relatively longer nose of skeletal-bound mesh 550 will likely have a different influence value than the shorter nose of skeletal-bound mesh 500 for a joint that influences the nose, such as a head or neck joint. Thus, vertices at the end of the relatively longer nose of the second creature will move further than vertices on the relatively shorter nose of the first creature when the head/neck of the underlying skeleton is moved at runtime.

After mesh binding is complete, there are provided mesh binding data in the form of UV maps that represent the binding of the mesh to the skeleton. Here, the values U and V represent horizontal and vertical dimensions of an array, respectively. The array is a mesh binding that encodes how each vertex is influenced by one or more joints of the skeleton, where the mesh has one vertex corresponding to each element of the array.

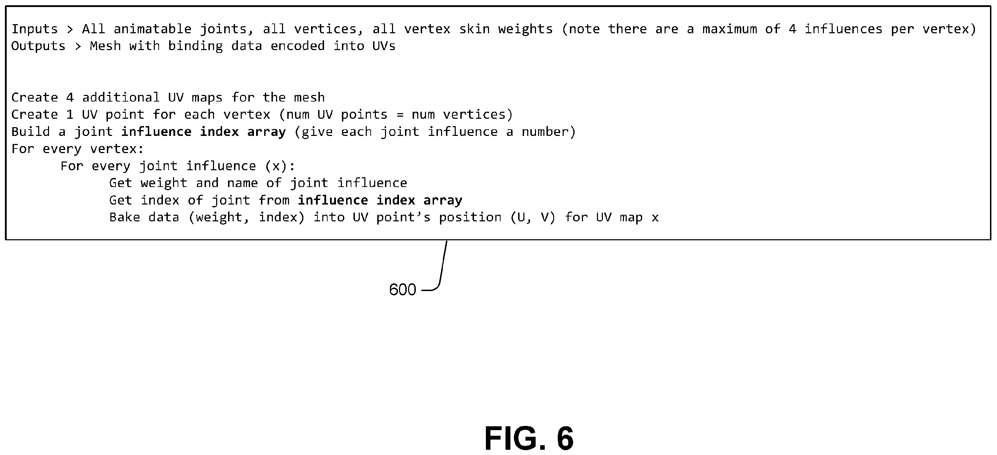

FIG. 6 shows pseudocode 600 for mesh binding. The pseudocode receives weights for each influencer joint for each vertex and creates four UV maps for the mesh.

RUNTIME DEFORMATION

The skeletal animation data generated by the animation baking and the mesh binding data generated by the mesh binding can be employed at runtime to generate one or more animations. For instance, both the skeletal animation data and the mesh binding data can be passed to a vertex shader on a graphics processing unit for deformation at runtime. Recall that the skeletal animation data can be represented as textures suitable for processing on a graphics processing unit, and the mesh binding data can be represented as a UV array also suitable for processing on a graphics processing unit. In other words, the data structures used to represent the skeletal animation and mesh binding can leverage the parallel processing capabilities of the graphics processing unit, resulting in low-latency processing that allows for high frame rates of multiple parallel animations at runtime.

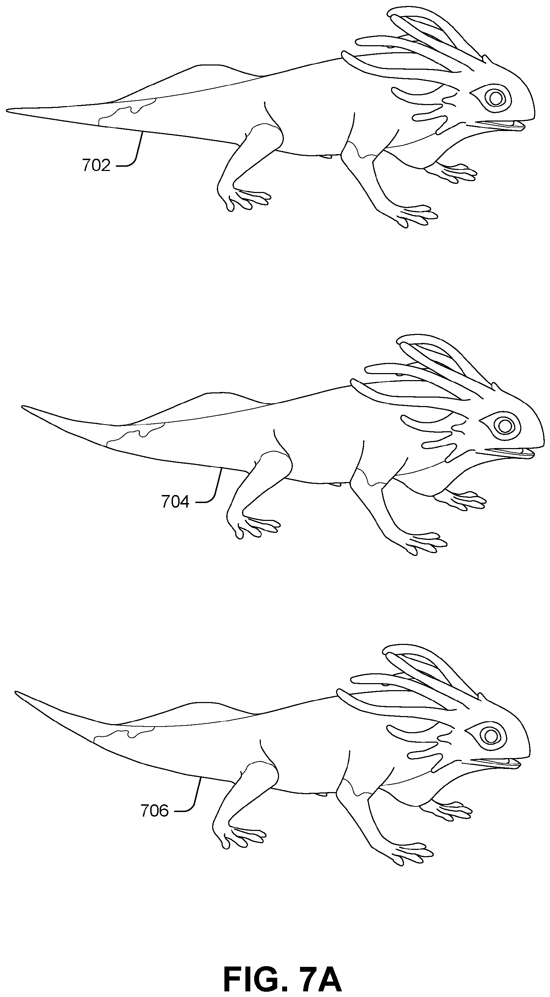

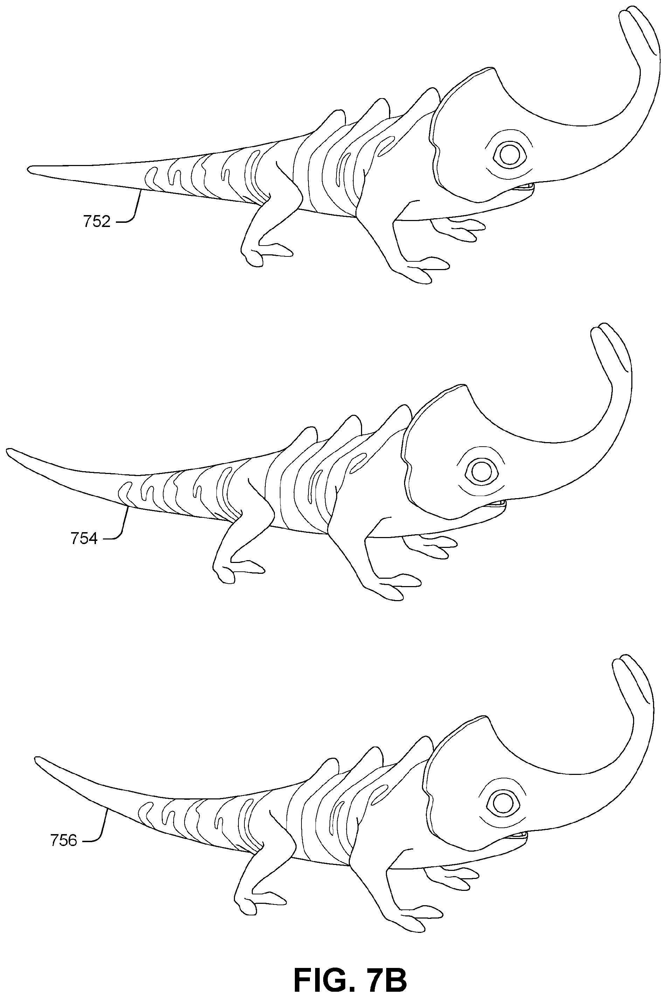

FIGS. 7A and 7B show example animations that can be generated using the example skeletons and meshes introduced above. FIG. 7A shows frames 702, 704, and 706 of a first animation of a first creature, where the tail of the first creature moves upward through the three frames. FIG. 7B shows frames 752, 754, and 756 of a second animation of a second creature, where the tail of the second creature moves upward through the three frames. As noted, the second creature shares the same skeleton as the first creature but uses a different mesh because the second creature has a different outer surface than the first character. Thus, the resulting animation of the two characters is also different, e.g., the first creature has a "bump' on the tail that moves with the tail, but this bump is not present on the second creature. Likewise, the second creature has skin markings that move with the tail, but these skin markings are not present on the first creature.

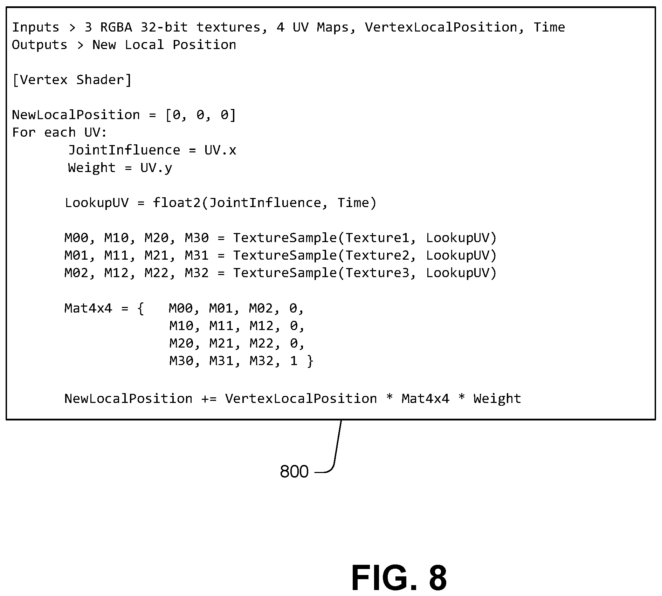

FIG. 8 shows deformation pseudocode 800 that can be implemented to generate an animation at runtime by deforming the mesh according to the animation. For instance, the vertex shader could implement the pseudocode 800 to determine new local positions for each vertex of the original mesh. Then, the new local positions can be transformed into world positions for rendering of the animation.

EXAMPLE PROCESSING ARCHITECTURE

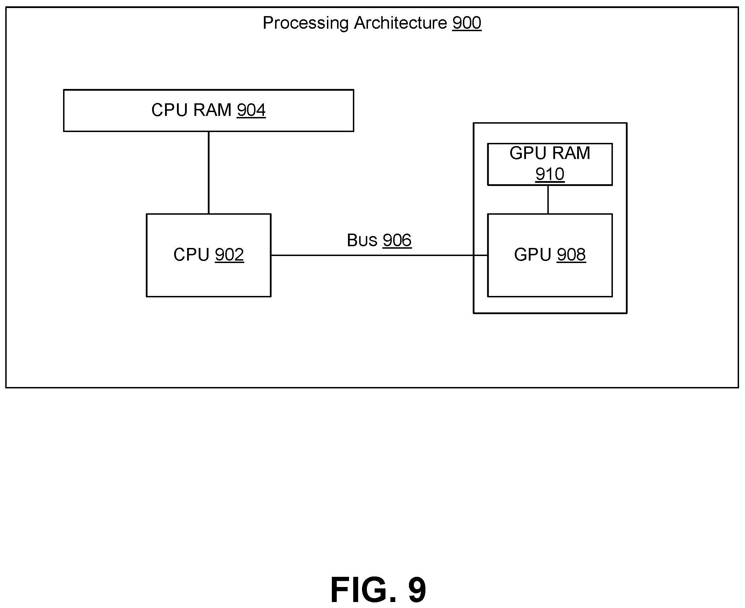

FIG. 9 illustrates an example processing architecture 900. The processing architecture includes a central processing unit 902, a CPU random access memory 904, a bus 906, a graphics processing unit 908, and a GPU random access memory 910. At runtime, the central processing unit can load skeletal animation data and mesh binding data into the central processing unit random access memory 904. The central processing unit can then initiate a bus transfer over bus 906 to GPU random access memory 910. The graphics processing unit can process the skeletal animation data and the mesh binding data to generate an animation that is output for display.

The central processing unit 902 and graphics processing unit 908 have specific characteristics with corresponding advantages and disadvantages. The central processing unit has relatively few cores that can be programmed very flexibly to implement complex logical operations and can handle multi-threaded scenarios by running different streams of instructions on different cores. On the other hand, the graphics processing unit has many cores (e.g., thousands) that can handle multiple parallel operations at once given a single instruction. For instance, the cores of a graphics processing unit can perform matrix additions and multiplications very quickly. While the graphics processing unit is limited terms of flexibility for arbitrary logical programming, the graphics processing unit is far faster than the central processing unit at performing specific mathematical operations that are utilized for graphics processing such as the deformation operations described herein. Further, the skeletal animation data and mesh binding data are structured as textures and UV maps, respectively, that can take advantage of the massively parallel processing capabilities of the graphics processing unit.

EXAMPLE SYSTEM

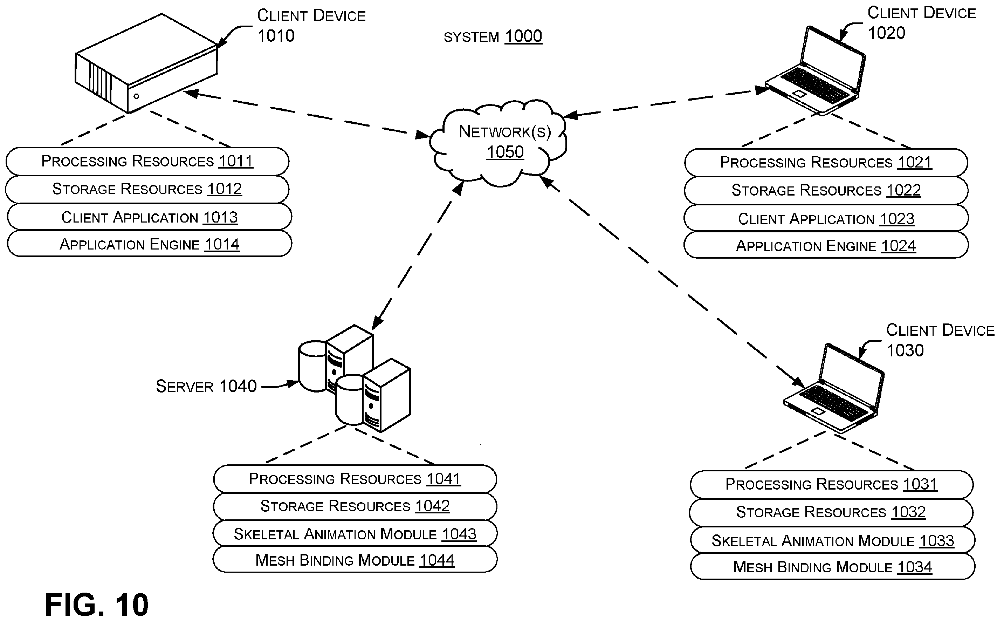

The present implementations can be performed in various scenarios on various devices. FIG. 10 shows an example system 1000 in which the present implementations can be employed, as discussed more below. As shown in FIG. 10, system 1000 includes a client device 1010, a client device 1020, a client device 1030, and a server 1040, connected by one or more network(s) 1050. Note that the client device can be embodied both as a mobile device such as smart phones or tablets, as well as stationary devices such as desktops, server devices, wearable devices such as virtual or augmented reality headsets, etc. Likewise, the servers can be implemented using various types of computing devices. In some cases, any of the devices shown in FIG. 10, but particularly the servers, can be implemented in data centers, server farms, etc.

Client device 1010 can have processing resources 1011 and storage resources 1012, client device 1020 can have processing resources 1021 and storage resources 1022, client device 1030 can have processing resources 1031 and storage resources 1032, and server 1040 can have processing resources 1041 and storage resources 1042. The devices of system 1000 may also have various modules that function using the processing and storage resources to perform the techniques discussed herein. The storage resources can include both persistent storage resources, such as magnetic or solid-state drives, and volatile storage, such as one or more random-access memory devices. In some cases, the modules are provided as executable instructions that are stored on persistent storage devices, loaded into the random-access memory devices, and read from the random-access memory by the processing resources for execution. Any of the devices in system 1000, and particularly client devices 1010 and 1020, can have processing and/or storage resources corresponding to the components of processing architecture 900.

Client device 1010 has a client application 1013 and an application engine 1014. For example, the client application can be a video game, augmented reality application, and/or virtual reality application that generates animations using the techniques described herein. The application engine can provide functionality such as audio rendering, graphics rendering, or physics simulations that can be used by the client application.

Client device 1020 can have a client application 1023 and an application engine 1024 similar to those described for client device 1010. Note that client devices 1010 and 1020 are shown as a console and a laptop personal computer, respectively. However, these are merely example form factors and a video game, augmented reality application, and/or virtual reality application, and/or application engine can also be provided on a mobile device, server, augmented or virtual reality headset, etc.

Client device 1030 can include as a skeletal animation module 1033, which is an animation tool that can be configured to generate skeletal animation data from one or more keyframes, as described elsewhere herein. Client device 1030 can also include a mesh binding module 1034, which is an animation tool that can be configured to bind one or more meshes to a skeleton. Server 1040 can provide a skeletal animation module 1043 and a mesh binding module 1044 similar to those on client device 1030, which allow end users on client devices that lack local animation tools to generate skeletal animation data and/or mesh binding data by accessing server 1040. The skeletal animation data and mesh binding data can be distributed to the client devices 1010 and 1020, where the client applications and/or application engines can generate animations by performing runtime deformation of a mesh based on the skeletal animation data and the mesh binding data.

EXAMPLE OFFLINE PROCESSING METHOD

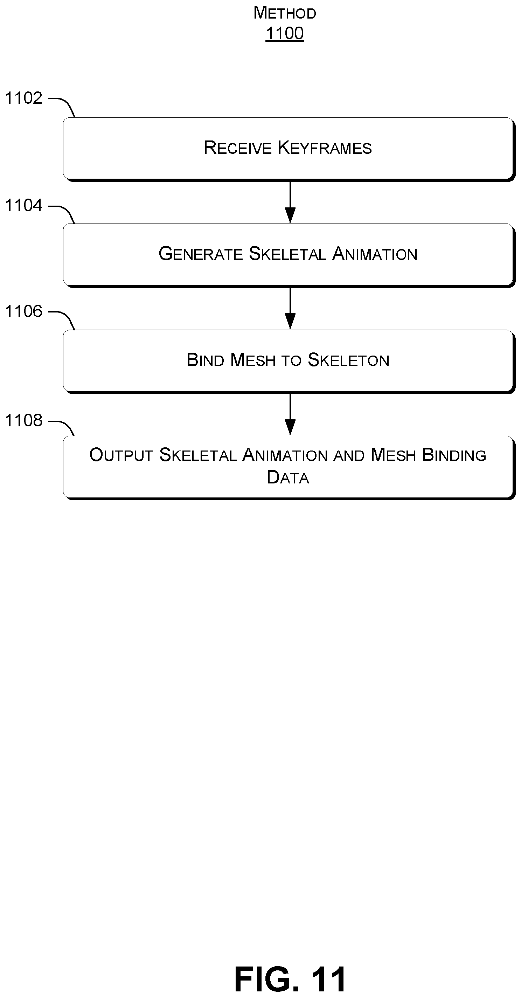

FIG. 11 illustrates an example computer-implemented method 1100 for offline processing, consistent with some implementations of the present concepts. Method 1100 can be implemented on many different types of devices, e.g., by one or more cloud servers, by a client device such as a laptop, tablet, or smartphone, or by combinations of one or more servers, client devices, etc.

Method 1100 begins at block 1102, where keyframes are received. For instance, the keyframes can represent movement of a character having a skeleton. The keyframes can convey movement of vertices of the character.

Method 1100 continues at block 1104, where skeletal animation data is generated. For instance, the skeletal animation data can be generated by storing a bind pose matrix for the skeleton in a bind pose (e.g., FIG. 2A). For each keyframe, a relative matrix can be computed for each joint in the skeleton from the bind pose to a target pose represented in that keyframe. The relative matrix can be used to determine corresponding textures. The textures can be in the form of red, green, blue, and alpha (RGBA) values of pixels of three textures. The first texture can include RGBA values representing the first column of the transformation matrix for each joint of the skeleton, the second texture can include RGBA values representing the second column of the transformation matrix for each joint of the skeleton, and the third texture can include RGBA values representing the third column of the transformation matrix for each joint of the skeleton. The textures can have rows representing frames of the animation, and columns representing individual bones of the skeleton. These textures are an example of skeletal animation data that can be generated at block 1104.

Method 1100 continues at block 1106, where a mesh is bound to the skeleton to obtain mesh binding data. For instance, a skin weighting technique can be performed that encodes vertex skin weights to corresponding joints. For instance, each vertex of a mesh can have a specified number (e.g., four) joints that influence that vertex, and the extent to which each vertex is influenced by a given joint is provided by a corresponding numerical weight. These values can be encoded in a joint influence index array and then stored in UV maps as mesh binding data.

Method 1100 continues at block 1108, where the skeletal animation data and the mesh binding data are output. For instance, the skeletal animation data and the mesh binding data can be distributed to an end user device as part of a video game, virtual reality application, and/or augmented reality application. At runtime, the application can use the skeletal animation data and the mesh binding data to deform a mesh, resulting in an animation of a character.

Note that blocks 1106 and 1108 of method 1100 can be performed multiple times by reusing the same skeletal animation data generated at block 1104. For instance, animations of characters with different skins that share the same underlying skeleton can be generated by binding different meshes for the respective characters to the same skeleton at block 1106. Likewise, the same character can be represented at different levels of detail by using different meshes, with meshes at higher levels of detail having more vertices. By binding the different meshes to the same skeleton, that character can be animated at different levels of detail at runtime.

More generally, the skeletal animation data generated at block 1104 can be shared among many different characters as long as they use the same underlying skeleton.

EXAMPLE ONLINE PROCESSING METHOD

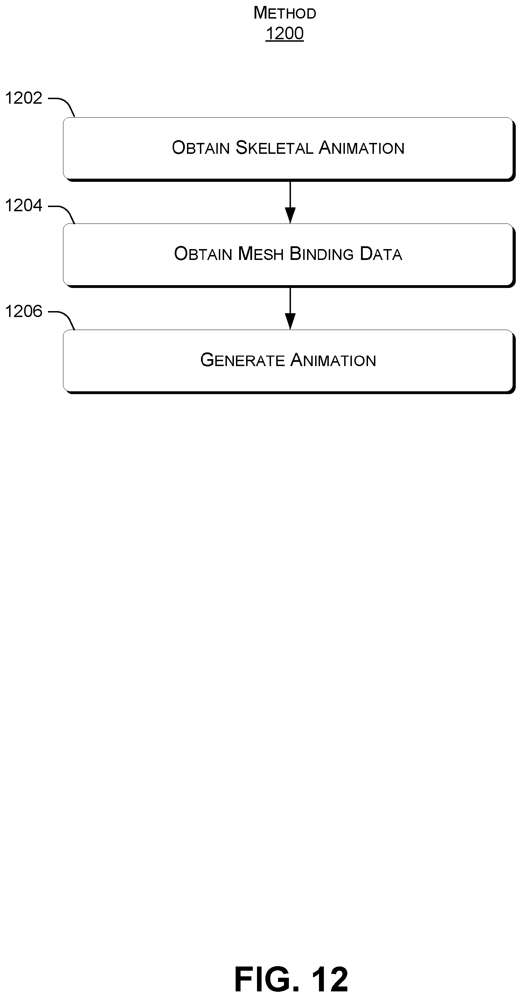

FIG. 12 illustrates an example computer-implemented method 1200 for runtime processing, consistent with some implementations of the present concepts. Method 1200 can be implemented on many different types of devices, e.g., by one or more cloud servers, by a client device such as a laptop, tablet, or smartphone, or by combinations of one or more servers, client devices, etc.

Method 1200 begins at block 1202, where skeletal animation data is obtained. The skeletal animation data can represent movement of a skeleton having joints connecting bones. For instance, the skeletal animation data can be provided as textures in the form of red, green, blue, and alpha values of pixels. In some implementations, three textures are provided as described above. The textures can have rows representing frames of the animation, and columns representing individual bones of the skeleton.

Method 1200 continues at block 1204, where mesh binding data is obtained. For instance, the mesh binding data can be provided as four UV maps. The UV maps can collectively convey the extent to which individual joints of the skeleton influence movement of individual vertices of a mesh representing an outer surface of a character.

Method 1200 continues at block 1206, where an animation is generated by deforming the mesh data according to the skeletal animation. For instance, a vertex shader on a graphics processing unit can deform the mesh data by offsetting vertex positions of the mesh into a deformed animation. This can involve mapping from local positions of the vertices relative to the original mesh to world positions of the vertices where they will be displayed to a user.

Note that method 1200 can be performed using the full skeletal animation data, or the skeletal animation data can be selectively applied at runtime. For instance, recall that the textures have columns representing bones of the skeleton. Assume that skeletal animation data is provided that moves both the head and tail of a character. By only applying the columns of the texture that apply to the bones that influence movement of the tail, the character can be animated by moving only the tail. Likewise, by only applying the columns of the texture that apply to the bones that influence movement of the head, the character can be animated by moving only the head. Thus, for instance, consider a video game controller where a first button provides an input for moving the tail of the character and a second button provides an input for moving the head of the character. When the first button of the video game controller is pressed, the central processing unit can instruct the graphics processing unit to apply the columns of the texture that correspond to the bones that move the tail. When the second button of the video game controller is pressed, the central processing unit can instruct the graphics processing unit to apply the columns of the texture that correspond to the bones that move the head. More generally, the character can be selectively animated at runtime by selectively applying a subset of the columns of the skeletal animation data.

As another example, recall that the textures have rows representing frames of the animation. Assume that skeletal animation data is provided that moves the tail of a character a full 90 degrees, from horizontal to vertical, with the tail being at 45 degrees halfway through the animation. By only applying the first half of the rows of the textures, the character can be animated by moving the tail from horizontal to 45 degrees. Likewise, by only applying the second half of the rows of the textures, the character can be animated by moving the tail from 45 degrees to fully vertical. Thus, for instance, consider a video game controller where a first button provides an input for moving the tail of the character from horizontal to 45 degrees, and a second button provides an input for moving the tail of the character from 45 degrees to vertical. When the first button of the video game controller is pressed, the central processing unit can instruct the graphics processing unit to apply the first half of the rows of the texture in order. When the second button of the video game controller is pressed, the central processing unit can instruct the graphics processing unit to apply the second half of the rows of the texture. More generally, the character can be selectively animated at runtime by selectively applying a subset of the rows of the skeletal animation data to control which frames of the animation are displayed to the end user.

TECHNICAL EFFECT

As noted above, skeletal mesh animation is very flexible because this technique allows for arbitrary manipulation of a character at runtime, since the animation is not limited to any precomputed data. However, skeletal mesh animation does not scale well to animating multiple characters at once. In particular, skeletal mesh animation involves extensive use of the central processing unit and main memory. As a consequence, skeletal mesh animation can result in very slow frame rates if applied to multiple characters in parallel, and this problem is worsened when the characters need to respond to inputs received rapidly at runtime.

On the other hand, texture vertex animations are generated in an offline process and can execute very quickly on a graphics processing unit but have several limitations. For instance, texture vertex animations store animation data on a per-vertex basis for a given mesh. As a consequence, texture vertex animation only works for characters that have the specific mesh represented by the corresponding textures. Furthermore, a mesh can have many vertices, and thus texture vertex animations can consume significant amounts of graphics processing unit memory.

In contrast, there tend to be far fewer bones in a skeleton than vertices in a mesh. As a consequence, the disclosed texture joint animation techniques allow for more animations to fit in the memory of a graphics processing unit. This is even more true when considering animations at higher levels of detail, where meshes with very high numbers of vertices are used. In contrast, the per-joint transformation matrix used by texture joint animation does not vary in size by level of detail of the mesh.

In addition, the structure of the skeletal animation data allows for some runtime modification of animations. As noted above, a subset of the columns of the textures can be applied to selectively animate part of a character. Likewise, a subset of the rows of the textures can be applied to selectively output less than all of the frames of the skeletal animation. As a result, a certain amount of runtime flexibility can be provided that is not available using texture vertex animation techniques.

As a further point, note that rotations are interpolated directly using the disclosed techniques. In contrast, texture vertex animation generally implements rotations by computing vertex positions, rather than directly interpolating rotations. The direct interpolation of rotation employed by texture joint animation allows for smoother-appearing animations at runtime.

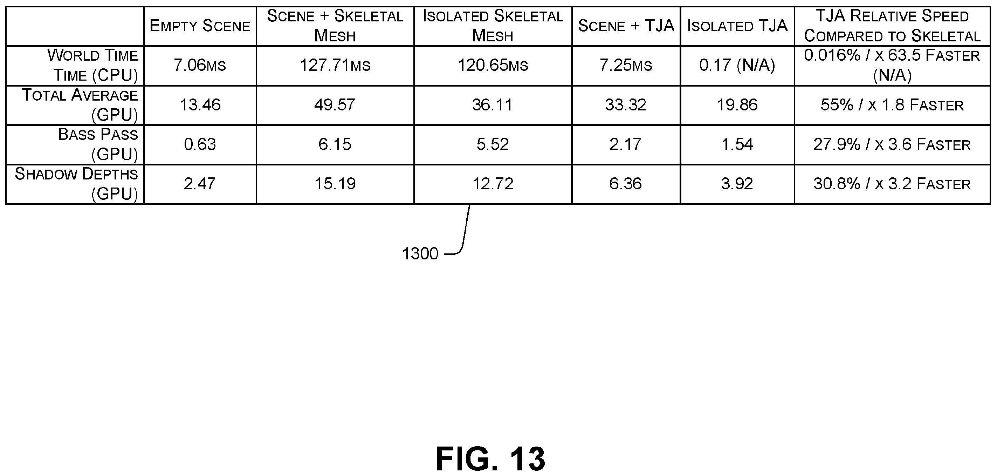

FIG. 13 illustrates an experimental results table 1300 that conveys performance statistics computed using 1,024 characters that were animated concurrently using both skeletal mesh animation and texture joint animation. An empty scene was also tested to determine overhead costs to isolate the additional costs of the two different animation techniques. As can be seen from FIG. 13, texture joint animation has very little additional CPU cost, whereas skeletal mesh animation has a significant additional CPU cost relative to the empty scene. In addition, GPU performance is also significantly improved by texture joint animation as compared to skeletal mesh animation.

DEVICE IMPLEMENTATIONS

As noted above with respect to FIG. 10, system 1000 includes several devices, including a client device 1010, a client device 1020, a client device 1030, and a server 1040. As also noted, not all device implementations can be illustrated, and other device implementations should be apparent to the skilled artisan from the description above and below.

The term "device", "computer," "computing device," "client device," and or "server device" as used herein can mean any type of device that has some amount of hardware processing capability and/or hardware storage/memory capability. Processing capability can be provided by one or more hardware processors (e.g., hardware processing units/cores) that can execute computer-readable instructions to provide functionality.

Computer-readable instructions and/or data can be stored on storage, such as storage/memory and or the datastore. The term "system" as used herein can refer to a single device, multiple devices, etc.

Storage resources can be internal or external to the respective devices with which they are associated. The storage resources can include any one or more of volatile or non-volatile memory, hard drives, flash storage devices, and/or optical storage devices (e.g., CDs, DVDs, etc.), among others. As used herein, the terms "computer-readable medium" and "computer-readable media" can include signals. In contrast, the terms "computer-readable storage medium" and "computer-readable storage media" exclude signals. Computer-readable storage media includes "computer-readable storage devices." Examples of computer-readable storage devices include volatile storage media, such as RAM, and non-volatile storage media, such as hard drives, optical discs, and flash memory, among others.

In some cases, the devices are configured with a general-purpose hardware processor and storage resources. Processors and storage can be implemented as separate components or integrated together as in computational RAM. In other cases, a device can include a system on a chip (SOC) type design. In SOC design implementations, functionality provided by the device can be integrated on a single SOC or multiple coupled SOCs. One or more associated processors can be configured to coordinate with shared resources, such as memory, storage, etc., and/or one or more dedicated resources, such as hardware blocks configured to perform certain specific functionality. Thus, the term "processor," "hardware processor" or "hardware processing unit" as used herein can also refer to central processing units (CPUs), graphical processing units (GPUs), controllers, microcontrollers, processor cores, or other types of processing devices suitable for implementation both in conventional computing architectures as well as SOC designs.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In some configurations, any of the modules/-code discussed herein can be implemented in software, hardware, and/or firmware. In any case, the modules/-code can be provided during manufacture of the device or by an intermediary that prepares the device for sale to the end user. In other instances, the end user may install these modules/code later, such as by downloading executable code and installing the executable code on the corresponding device.

Also note that devices generally can have input and/or output functionality. For example, computing devices can have various input mechanisms such as keyboards, mice, touchpads, voice recognition, gesture recognition (e.g., using depth cameras such as stereoscopic or time-of-flight camera systems, infrared camera systems, RGB camera systems or using accelerometers/gyroscopes, facial recognition, etc.), microphones, etc. Devices can also have various output mechanisms such as printers, monitors, speakers, etc.

Also note that the devices described herein can function in a stand-alone or cooperative manner to implement the described techniques. For example, the methods and functionality described herein can be performed on a single computing device and/or distributed across multiple computing devices that communicate over network(s) 1050. Without limitation, network(s) 1050 can include one or more local area networks (LANs), wide area networks (WANs), the Internet, and the like.

Various examples are described above. Additional examples are described below. One example includes a method comprising generating skeletal animation data representing movement of a skeleton having joints connecting bones, binding a mesh to the skeleton to obtain mesh binding data and outputting the skeletal animation data and the mesh binding data, the skeletal animation data and the mesh binding data providing a basis for runtime deformation of the mesh to generate an animation.

Another example can include any of the above and/or below examples where generating the skeletal animation data represents a transformation from a first keyframe to a second keyframe for each of the joints.

Another example can include any of the above and/or below examples where the skeletal animation data comprises textures having rows representing frames and columns representing individual bones.

Another example can include any of the above and/or below examples where the mesh binding data represents influence of individual joints on corresponding vertices of the mesh.

Another example can include any of the above and/or below examples where the mesh binding data comprises a joint influence index array.

Another example can include any of the above and/or below examples where the method further comprises binding another mesh to the skeleton to obtain other mesh binding data and outputting the other animation data, the skeletal animation data and the other animation data providing a basis for runtime deformation of the another mesh resulting in another animation. Another example can include any of the above and/or below examples where the animation and the another animation representing different characters that share the skeleton.

Another example can include any of the above and/or below examples where the animation and the another animation representing a particular character at different levels of detail.

Another example can include a method comprising obtaining skeletal animation data representing movement of a skeleton having joints connecting bones, obtaining mesh binding data representing a binding of a mesh to the skeleton and generating an animation by performing runtime deformation of the mesh based on the skeletal animation data and the mesh binding data.

Another example can include any of the above and/or below examples where generating the animation comprises offsetting vertex positions of the mesh based on the skeletal animation data.

Another example can include any of the above and/or below examples where the skeletal animation data comprises textures, the textures having rows representing individual frames and columns representing individual bones.

Another example can include any of the above and/or below examples where the mesh binding data represents influence of individual joints on corresponding vertices of the mesh.

Another example can include any of the above and/or below examples where the method further comprises selectively applying a subset of the rows of the skeletal animation data based on input received at runtime.

Another example can include any of the above and/or below examples where the method further comprises selectively applying a subset of the columns of the skeletal animation data based on input received at runtime. Another example can include any of the above and/or below examples where performed on a graphics processing unit.

Another example can include a system comprising a central processing unit a graphics processing unit and wherein the central processing unit is configured to obtain skeletal animation data representing movement of a skeleton having joints connecting bones, obtain mesh binding data representing a binding of a mesh to the skeleton and transfer the skeletal animation data and the mesh binding data to the graphics processing unit and wherein the graphics processing unit is configured to receive the skeletal animation data and the mesh binding data from the central processing unit and generate an animation by performing runtime deformation of the mesh based on the skeletal animation data and the mesh binding data.

Another example can include any of the above and/or below examples where the central processing unit is configured to instruct the graphics processing unit to generate multiple parallel animations of a particular character according to the skeletal animation data and the mesh binding data.

Another example can include any of the above and/or below examples where the skeletal animation data includes one or more textures and wherein the mesh binding data includes one or more UV maps.

Another example can include any of the above and/or below examples where the graphics processing unit is configured to offset vertex positions of the mesh based on the one or more textures and the one or more UV maps to generate the animation.

Another example can include any of the above and/or below examples where the central processing unit is configured to instruct the graphics processing unit to perform multiple other animations on a per-joint basis in response to received user inputs.

CONCLUSION

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and other features and acts that would be recognized by one skilled in the art are intended to be within the scope of the claims.

**Claims**

1. A method (1100), comprising:

   generating (1104) skeletal animation data representing movement of a skeleton having joints connecting bones;
   binding (1106) a mesh to the skeleton to obtain mesh binding data; and
   outputting (1108) the skeletal animation data and the mesh binding data,
   the skeletal animation data and the mesh binding data providing a basis for runtime deformation of the mesh to generate an animation.

2. The method of claim 1, wherein generating the skeletal animation data represents a transformation from a first keyframe to a second keyframe for each of the joints.

3. The method of claim 1 or 2, wherein the skeletal animation data comprises textures having rows representing frames and columns representing individual bones.

4. The method of any of claims 1-3, wherein the mesh binding data represents influence of individual joints on corresponding vertices of the mesh.

5. The method of any of claims 1-4, wherein the mesh binding data comprises a joint influence index array.

6. The method of any of claims 1-5, further comprising:

binding another mesh to the skeleton to obtain other mesh binding data; and

outputting the other animation data,

the skeletal animation data and the other animation data providing a basis for runtime deformation of the another mesh resulting in another animation.

7. A method (1200) comprising:

obtaining (1202) skeletal animation data representing movement of a skeleton having joints connecting bones;

obtaining (1204) mesh binding data representing a binding of a mesh to the skeleton; and

generating (1206) an animation by performing runtime deformation of the mesh based on the skeletal animation data and the mesh binding data.

8. The method of claim 7, wherein generating the animation comprises:
offsetting vertex positions of the mesh based on the skeletal animation data.

9. The method of claim 7 or 8, wherein the skeletal animation data comprises textures, the textures having rows representing individual frames and columns representing individual bones.

10. The method of any of claims 7-9, wherein the mesh binding data represents influence of individual joints on corresponding vertices of the mesh.

11. The method of any of claims 7-10, further comprising:

selectively applying a subset of the rows of the skeletal animation data based on input received at runtime; or

selectively applying a subset of the columns of the skeletal animation data based on input received at runtime.

12. A system (1000, 1010, 1020, 1030) comprising:

a central processing unit (1011, 1021, 1031, 902);

a graphics processing unit (1011, 1021, 1031, 908); and

wherein the central processing unit is configured to:

obtain skeletal animation data representing movement of a skeleton having joints connecting bones;

obtain mesh binding data representing a binding of a mesh to the skeleton; and

transfer the skeletal animation data and the mesh binding data to the graphics processing unit, and

wherein the graphics processing unit is configured to:

receive the skeletal animation data and the mesh binding data from the central processing unit; and

generate an animation by performing runtime deformation of the mesh based on the skeletal animation data and the mesh binding data.

13. The system of claim 12, wherein the central processing unit is configured to:
instruct the graphics processing unit to generate multiple parallel animations of a particular character according to the skeletal animation data and the mesh binding data.

14. The system of claim 12 or 13, wherein the skeletal animation data includes one or more textures and wherein the mesh binding data includes one or more UV maps.

15. The system of claim 14, wherein the graphics processing unit is configured to:
offset vertex positions of the mesh based on the one or more textures and the one or more UV maps to generate the animation.

EP 4 648 014 A1

```
┌─────────────────────────────────────────────────────────────────────────┐
│                    TEXTURE JOINT ANIMATION 110                            │
└─────────────────────────────────────────────────────────────────────────┘
                    │                                           │
                    ▼                                           ▼
┌───────────────────────────────────────┐      ┌──────────────────────────┐
│         OFFLINE PROCESS 120            │      │   RUNTIME PROCESS 130    │
└───────────────────────────────────────┘      └──────────────────────────┘
         │                      │                            │
         ▼                      ▼                            ▼
┌──────────────────┐  ┌──────────────────┐      ┌──────────────────────────┐
│ ANIMATION BAKING │  │  MESH BINDING 124│      │    DEFORMATION 132       │
│       122        │  │                  │      │                          │
└──────────────────┘  └──────────────────┘      └──────────────────────────┘
```

# FIG. 1

**FIG. 2A**

**FIG. 2B**

**FIG. 2C**

```
Inputs > All animatable joints, all keyframes
Outputs > 3 RGBA 32-bit textures


For every joint:
     Store bind pose transform matrix (in local space)
For every frame:
     For every joint:
          Get transform matrix (in local space)
          Compute relative matrix from bind pose to target
          Store relative matrix
Create 3 RGBA 32-bit textures
For every frame (x):
     For every relative matrix (y):
          Store first column of matrix as RGBA in pixel (x, y) of first texture
          Store second column of matrix as RGBA in pixel (x, y) of second texture
          Store third column of matrix as RGBA in pixel (x, y) of third texture
```

300

# FIG. 3

EP 4 648 014 A1

**FIG. 4A**

**FIG. 4B**

500

**FIG. 5A**

550

**FIG. 5B**

```
Inputs > All animatable joints, all vertices, all vertex skin weights (note there are a maximum of 4 influences per vertex)
Outputs > Mesh with binding data encoded into UVs


Create 4 additional UV maps for the mesh
Create 1 UV point for each vertex (num UV points = num vertices)
Build a joint influence index array (give each joint influence a number)
For every vertex:
      For every joint influence (x):
            Get weight and name of joint influence
            Get index of joint from influence index array
            Bake data (weight, index) into UV point's position (U, V) for UV map x
```

600

FIG. 6

EP 4 648 014 A1

**FIG. 7A**

**FIG. 7B**

```
Inputs > 3 RGBA 32-bit textures, 4 UV Maps, VertexLocalPosition, Time
Outputs > New Local Position

[Vertex Shader]

NewLocalPosition = [0, 0, 0]
For each UV:
        JointInfluence = UV.x
        Weight = UV.y

        LookupUV = float2(JointInfluence, Time)

        M00, M10, M20, M30 = TextureSample(Texture1, LookupUV)
        M01, M11, M21, M31 = TextureSample(Texture2, LookupUV)
        M02, M12, M22, M32 = TextureSample(Texture3, LookupUV)

        Mat4x4 = {   M00, M01, M02, 0,
                     M10, M11, M12, 0,
                     M20, M21, M22, 0,
                     M30, M31, M32, 1 }

        NewLocalPosition += VertexLocalPosition * Mat4x4 * Weight
```

800

# FIG. 8

EP 4 648 014 A1

Processing Architecture 900

CPU RAM 904

GPU RAM
910

CPU 902

Bus 906

GPU 908

FIG. 9

CLIENT DEVICE
1010

SYSTEM 1000

CLIENT DEVICE
1020

PROCESSING RESOURCES 1011

STORAGE RESOURCES 1012

CLIENT APPLICATION 1013

APPLICATION ENGINE 1014

NETWORK(S)
1050

PROCESSING RESOURCES 1021

STORAGE RESOURCES 1022

CLIENT APPLICATION 1023

APPLICATION ENGINE 1024

SERVER 1040

CLIENT DEVICE
1030

PROCESSING RESOURCES 1041

STORAGE RESOURCES 1042

SKELETAL ANIMATION MODULE 1043

MESH BINDING MODULE 1044

PROCESSING RESOURCES 1031

STORAGE RESOURCES 1032

SKELETAL ANIMATION MODULE 1033

MESH BINDING MODULE 1034

FIG. 10

EP 4 648 014 A1

METHOD
1100

1102 — RECEIVE KEYFRAMES

1104 — GENERATE SKELETAL ANIMATION

1106 — BIND MESH TO SKELETON

1108 — OUTPUT SKELETAL ANIMATION AND MESH BINDING DATA

# FIG. 11

METHOD
1200

1202 — OBTAIN SKELETAL ANIMATION

1204 — OBTAIN MESH BINDING DATA

1206 — GENERATE ANIMATION

# FIG. 12

| | Empty Scene | Scene + Skeletal Mesh | Isolated Skeletal Mesh | Scene + TJA | Isolated TJA | TJA Relative Speed Compared to Skeletal |
|---|---|---|---|---|---|---|
| World Time Time (CPU) | 7.06ms | 127.71ms | 120.65ms | 7.25ms | 0.17 (N/A) | 0.016% / x 63.5 Faster (N/A) |
| Total Average (GPU) | 13.46 | 49.57 | 36.11 | 33.32 | 19.86 | 55% / x 1.8 Faster |
| Bass Pass (GPU) | 0.63 | 6.15 | 5.52 | 2.17 | 1.54 | 27.9% / x 3.6 Faster |
| Shadow Depths (GPU) | 2.47 | 15.19 | 12.72 | 6.36 | 3.92 | 30.8% / x 3.2 Faster |

1300

**FIG. 13**

EP 4 648 014 A1

Europäisches Patentamt
European Patent Office
Office européen des brevets

# EUROPEAN SEARCH REPORT

Application Number

EP 25 17 4576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 021 584 A (WUXI FANTIAN INFORMATION TECHNOLOGY CO LTD) 3 September 2014 (2014-09-03) * paragraph [0006] - paragraph [0009] * * paragraph [0028] * ----- | 1-15 | INV. G06T13/40 |

TECHNICAL FIELDS SEARCHED (IPC)

G06T

The present search report has been drawn up for all claims

| Place of search | Date of completion of the search | Examiner |
|---|---|---|
| The Hague | 5 September 2025 | Wahba, Alexander |

EP 4 648 014 A1

## ANNEX TO THE EUROPEAN SEARCH REPORT
## ON EUROPEAN PATENT APPLICATION NO.

EP 25 17 4576

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2025

| Patent document cited in search report | Publication date | Patent family member(s) | Publication date |
|---|---|---|---|
| CN 104021584 A | 03-09-2014 | NONE | |

For more details about this annex : see Official Journal of the European Patent Office, No. 12/82

EPO FORM P0459